# EUROPÄISCHE PATENTANMELDUNG

(11) **EP 1 325 771 A1**
(43) Veröffentlichungstag der Anmeldung: **09.07.2003**
(21) Anmeldenummer: 01130411.0
(22) Anmeldetag: 20.12.2001
(51) Int. Cl.: B01D 9/00, B01D 29/35

(54) **Vorrichtung sowie Verfahren zum Trennen von mit einer Flüssigkeit in einer Suspension befindlichen Kristallen von der Flüssigkeit**

(71) Anmelder: Messo -Chemietechnik GmbH, 47229 Duisburg (DE)
(72) Erfinder: Motnik, Alfred, 46539 Dinslaken (DE)
(74) Vertreter: Stenger, Watzke & Ring Patentanwälte

(57) **Zusammenfassung**

Um eine Vorrichtung zum Trennen von mit einer Flüssigkeit in einer Suspension befindlichen Kristallen von der Flüssigkeit so auszubilden, daß sie sich durch einen einfachen Aufbau auszeichnet, wird mit der Erfindung vorgeschlagen, daß die Vorrichtung mindestens einen mit der Suspension befüllbaren Filtertuchsack (23a, 23b) aufweist, dessen Filterporen so bemessen sind, daß die abzutrennenden Kristalle zurückgehalten werden, die Flüssigkeit die Filterporen jedoch passieren kann, und durch den die Flüssigkeit ohne weitere Hilfsmittel, angetrieben lediglich durch die auf sie wirkende Schwerkraft hindurchtritt. Mit der Erfindung wird weiterhin ein Verfahren zum Abtrennen von Kristallen aus einer Suspension angegeben, welches sich dadurch auszeichnet, daß die Suspension in das Innere mindestens eines Filtertuchsackes (23a, 23b) eingefüllt wird, wobei zur Trennung von Kristallen und Flüssigkeit die in der Suspension befindliche Flüssigkeit ohne weitere Hilfsmittel lediglich aufgrund der Schwerkraft durch das Material des Filtertuchsackes (23a, 23b) hindurch tritt, während die Kristalle aufgrund der Porengröße des Filtertuchsackes (23a, 23b) im Inneren des Filtertuchsackes (23a, 23b) zurückgehalten werden. Schließlich wird mit der Erfindung eine Kristallisationsanlage (1) zur Regeneration von chemischen Lösungen (7), insbesondere aus Beizen, der über eine Zuleitung (9) zu regenerierende Lösung (7) zuführbar ist und in der durch Kühlung ein der Lösung zu entziehender Bestandteil in Kristallform ausgefällt wird, angegeben, welches sich dadurch auszeichnet, daß die Kristallisationsanlage zum Trennen der ausgefällten Kristalle von der Lösung (7) eine oben beschriebene Vorrichtung enthält.

## Beschreibung

Die Erfindung betrifft eine Vorrichtung sowie ein Verfahren zum Trennen von in einer Suspension befindlichen Kristallen von der Flüssigkeit. Die Erfindung betrifft weiterhin eine Kristallisationsanlage zur Regeneration von chemischen Lösungen, insbesondere aus Beizen, der über eine Zuleitung zu regenerierende Lösung zuführbar ist und in dem durch Kühlung zu entziehender Bestandteil als Kristall ausgefällt wird, welche Kristallisationsanlage eine Vorrichtung zum Trennen von in einer Suspension befindlichen Kristallen von der Flüssigkeit enthält.

Vorrichtungen der eingangs genannten Art werden im Stand der Technik für die unterschiedlichsten Zwecke eingesetzt. So können beispielsweise in einer Kristallisationsanlage gewonnene Kristalle als gewünschtes Endprodukt aus einer Suspension herausgetrennt werden, um die so abgetrennten Kristalle anschließend weiter zu verarbeiten bzw. zu vermarkten. Andererseits kann eine gattungsgemäße Vorrichtung aber auch dazu benutzt werden, in einer Suspension enthaltene, störende Kristalle auszufiltern und die als Filtrat gewonnene Flüssigkeit einer weiteren Verwertung zuzuführen. So existieren beispielsweise Regenerationsanlagen zur Regeneration von chemischen Lösungen, bei denen durch eine Kühlungskristallisation in der Lösung enthaltene, unerwünschte Lösungsbestandteile kristallisiert werden. Die so ausgefällten und mit der zu regenerierenden chemischen Lösung in Suspension befindlichen Kristalle müssen zur Wiederverwendung der regenerierten chemischen Lösung in der oben beschriebenen Weise von der Suspension abgetrennt werden.

Je nach Anwendungsfall sind verschiedene Vorrichtungen zum Trennen von mit einer Flüssigkeit in einer Suspension befindlichen Kristallen von der Flüssigkeit bekannt. Häufig werden zu diesem Zweck Siebschleudern eingesetzt, die eine Suspension aufgrund der Zentrifugalkraft durch ein Sieb pressen und so die Kristalle von der Lösung trennt.

Alternativ ist es bekannt, zur Trennung von Suspensionen Trommelfilter einzusetzen, welche eine aus einem Filtermaterial gebildete Trommelwandung aufweisen. Auf der Außenseite der Trommelwandung wird die zu trennende Suspension angebracht, das Innere der Trommel wird mit einem Vakuum bzw. Unterdruck beaufschlagt, um somit durch das entstandene Druckgefälle die in der Suspension enthaltene Flüssigkeit durch das die Trommelwandung bildende Filtermaterial hindurch zu ziehen. Nach einem vergleichbaren Prinzip arbeiten die sogenannten Nutschen, bei welchen die Flüssigkeit einer zu trennenden Suspension ebenfalls mit Hilfe von Vakuum bzw. Unterdruck durch ein Filtermaterial gezogen wird.

Schließlich sind zur Auftrennung von Suspensionen Filterpressen bekannt, die ein umgekehrtes Prinzip wie die Trommelfilter und Nutschen anwenden. Anstatt auf der der Suspension abgewandten Seite des Filters einen Unterdruck bzw. ein Vakuum anzulegen, wird zum Durchtreiben der Flüssigkeit durch das Filtermaterial auf der Seite, auf der die Suspension anliegt, ein Überdruck angelegt.

All die bekannten Trennvorrichtungen sind vom apparativen Aufwand her vergleichsweise komplex und aufgrund der benötigten Antriebe bzw. Pumpen oder Kompressoren kostspielig sowohl in der Beschaffung als auch im Unterhalt.

Bei Trennvorrichtungen, die einen hohen Durchsatz von zu trennender Suspension pro Zeiteinheit bewerkstelligen, mag die vergleichsweise hohe Effizienz der vorgenannten Vorrichtungen eine kostspielige Investition in der Anschaffung einer Zentrifuge, eines Trommelfilters, einer Nutsche oder einer Filterpresse sowie deren kostenaufwendigen Betrieb und Unterhalt rechtfertigen. Für Vorrichtungen kleinerer und mittlerer Kapazität ist es jedoch besonders wünschenswert, verglichen mit den vorgenannten, bekannten Vorrichtungen kostengünstigere Alternativen aufzufinden.

Es ist daher **Aufgabe** der Erfindung, eine Vorrichtung zum Trennen von mit einer Flüssigkeit in einer Suspension befindlichen Kristallen von der Flüssigkeit anzugeben, die sich unter Vermeidung der Nachteile des Standes der Technik durch einen konstruktiv einfachen Aufbau auszeichnet. Mit der Erfindung soll weiterhin ein einfach durchzuführendes Verfahren zum Abtrennen von Kristallen aus einer Suspension angeben werden. In einem weiteren Aspekt soll schließlich mit der Erfindung einer Kristallisationsanlage zur Regeneration von chemischen Lösungen, insbesondere aus Beizen, der über eine Zuleitung zu regenerierende Lösung zuführbar ist und in der durch Kühlung ein der Lösung zu entziehender Bestandteil als Kristall ausgefällt wird, angegeben werden, bei der eine einfach aufgebaute Vorrichtung zum Abtrennen der Kristalle aus einer Suspension enthalten ist.

Hinsichtlich der Vorrichtung wird die vorgenannte Aufgabe erfindungsgemäß gelöst durch eine Vorrichtung der eingangs genannten Art mit mindestens einem mit der Suspension befüllbaren Filtertuchsack, dessen Filterporen so bemessen sind, daß die abzutrennenden Kristalle zurückgehalten werden, die Flüssigkeit die Filterporen jedoch passieren kann, und durch den die Flüssigkeit ohne weitere Hilfsmittel, angetrieben lediglich durch die auf sie wirkende Schwerkraft hindurchtritt.

Durch die erfindungsgemäß vorgesehene Anordnung mindestens eines Filtertuchsackes, mit dem die Suspension in ihre Bestandteile Kristalle und Flüssigkeit aufgeteilt werden kann, wird ein System bereitgestellt, welches aufgrund der Schwerkraftausnutzung einfach aufgebaut und damit sowohl in Anschaffungs- als auch in Unterhaltungskosten günstig ist. Im Gegensatz zu vorbekannten Vorrichtungen kann bei der erfindungsgemäßen Vorrichtung gänzlich auf in der Anschaffung teure und im Energieverbrauch ungünstige Elemente mit motorisch angetriebenen, bewegten Teilen, wie beispielsweise Zentrifugen, Pumpen oder Kompressoren, verzichtet werden.

Zwar kann mit der erfindungsgemäßen Vorrichtung, die lediglich die Schwerkraft als treibende Kraft für die Trennung von Flüssigkeit und Kristallen einer Suspension nutzt, die gewünschte Trennung nicht mit der Geschwindigkeit erfolgen, wie sie aufgrund der zusätzlichen Hilfsmittel (Fliegkraft, Druck) bei den vorbekannten Systemen erreicht werden kann. Für Vorrichtungen mit geringem oder mittleren Durchsatz ist die mit der erfindungsgemäßen Vorrichtung erreichbare Trenngeschwindigkeit jedoch ausreichend, so daß die Einbußen bei der Trenngeschwindigkeit gegenüber den genannten Vorteilen, insbesondere der konstruktiven Einfachheit und den Kostenvorteilen, in den Hintergrund treten.

Eine Weiterbildung der Erfindung sieht vor, daß der Filtertuchsack in der Vorrichtung vertikal aufgehängt ist. Durch diese Anordnung wird die Wirkung der Schwerkraft durch Ausbildung einer auf der an dem Filtertuchgewebe anliegenden Schicht der Suspension lastenden Säule verstärkt, der Trennvorgang somit beschleunigt.

Gemäß einer Weiterbildung der Erfindung wird vorgeschlagen, daß diese eine mit einem Gefälle versehene, in das Innere des Filtertuchsacks mündende Zuführleitung aufweist, durch welche die Suspension aufgrund der Schwerkraft in den Filtertuchsack gelangt. Durch diese Konstruktion entfällt auch für die Zuführung der Suspension zu dem für die eigentliche Trennung von Flüssigkeit und Kristalllen zuständigen Filtertuchsack ohne kostenaufwendige Fördermittel, sondern lediglich über Schwerkraft statt. Die Suspension muß dafür der Zuführleitung lediglich an einem Punkt zugeführt werden, der oberhalb des Filtertuchsacks liegt. Durch die Neigung der Zuführleitung erfolgt der Weitertransport der Suspension ohne äußeren Antrieb, lediglich aufgrund der Schwerkraft.

Um eine chemische Verunreinigung der Suspensionsbestandteile, d. h. der Kristalle und/oder der Flüssigkeit, zu vermeiden, ist der Filtertuchsack gemäß einer weiterbildenden Ausgestaltung der Erfindung aus einem für die beteiligten Kristalle und Flüssigkeit resistenten Material gefertigt. Als Material für den Filtertuchsack kann beispielsweise ein Kunststoffgewebe, vorzugsweise ein Polypropylengewebe, verwendet werden.

Um einen sicheren Rückhalt aus der Suspension herauszutrennenden Kristalle in dem Filtertuchsack zu gewährleisten, weist der Filtertuchsack gemäß einer Weiterbildung der Erfindung eine wirksame Porenweite von 100 bis 300 µm, vorzugsweise von 150 bis 250 µm auf.

Um die bei der Trennung der Suspension in ihre Bestandteile Kristalle und Flüssigkeit durch den Filtertuchsack hindurch tretende Flüssigkeit ggf. weiterverwerten zu können bzw. die abgetrennte Flüssigkeit nicht unkontrolliert ablaufen zu lassen, wird gemäß einer Weiterentwicklung der Erfindung vorgeschlagen, das in der Vorrichtung vertikal unterhalb des Filtertuchsacks ein Auffangbehälter für die durch den Filtertuchsack hindurch tretende Flüssigkeit angeordnet ist.

Insbesondere wenn die Vorrichtung zur Abtrennung von Kristallen aus einer in einer chemisch reaktiven oder aggressiven, beispielsweise sauren, stark basischen oder giftigen, Lösung eingesetzt wird, ist es von Vorteil, wenn, wie gemäß einer Weiterbildung der Erfindung vorgeschlagen, der Filtertuchsack von einem als Spritzschutz dienenden, im unteren Bereich offenen Gehäuse umgeben ist. Das als Spritzschutz dienende Gehäuse ist im unteren Bereich offen, damit die den Filtertuchsack passierende Flüssigkeit ablaufen kann. Hierzu kann das Gehäuse auch in dem Sinne im unteren Bereich offen sein, daß dort eine Ablaufleitung für die abgetrennte Flüssigkeit vorhanden ist.

Um einen kontinuierlichen Betrieb der Vorrichtung zu gewährleisten, ist es von Vorteil, wenn gemäß einer Weiterbildung der Erfindung die Vorrichtung mindestens zwei Filtertuchsäcke aufweist, von denen jeweils einer als aktiver Filtertuchsack mit der Suspension befüllbar ist und der andere sich als passiver Filtertuchsack solange in einer Wartestellung befindet, bis der erste Filtertuchsack zu Zwecken der Leerung in einen passiven Zustand geschaltet wird und der zweite Filtertuchsack dann als aktiver Filtertuchsack mit der Suspension befüllbar ist. Durch eine solche Ausgestaltung ist es möglich, die Vorrichtung auch dann weiter zu betreiben, wenn ein Filtertuchsack mit abgetrennten Kristallen gefüllt ist und eine Leerung des Filtertuchsacks erforderlich ist. Der gefüllte Filtertuchsack wird von einem weiteren Zustrom an Suspension abgeschnitten, die Suspension wird nun dem zuvor in Wartestellung befindlichen, passiven Filtertuchsack zugeführt, der sodann als aktiver Filtertuchsack wirkt. Vor einer Leerung des mit abgetrennten Kristallen gefüllten Filtertuchsacks kann dieser beispielsweise noch über einen vorgebbaren Zeitraum abhängen, um letzte Reste der Flüssigkeit abtropfen zu lassen.

Um bei einer Leerung des Filtertuchsacks die in dem Filtertuchsack angesammelten Kristalle geordnet aufzunehmen, weist die Vorrichtung gemäß einer Weiterbildung der Erfindung einen Behälter zum Aufnehmen der in dem mindestens einen Filtertuchsack angesammelten Kristalle auf.

Aufgrund des Eigengewichtes der in einem gefüllten Filtertuchsack angesammelten Kristalle einerseits und aufgrund einer möglichen Aggressivität der von den Kristallen getrennten Flüssigkeit andererseits ist es oftmals nicht ohne weiteres möglich, die Filtertuchsäcke direkt manuell zu handhaben. Aus diesem Grunde und aus Gründen der Arbeitserleichterung und Automatisierung allgemein kann es von Vorteil sein, wenn die Vorrichtung gemäß einer Weiterbildung der Erfindung ein Handhabungsmittel, beispielsweise einen Kran, zum Handhaben des mindestens einen Filtertuchsackes aufweist.

Mit Hinblick auf die auf das Verfahren ausgerichtete Aufgabenstellung besteht die durch die Erfindung gegebene technische **Lösung** in einem Verfahren zum Abtrennen von Kristallen aus einer Suspension, bei dem die Suspension in das Innere mindestens eines Filtertuchsackes eingefüllt wird, wobei zur Trennung von Kristallen und Flüssigkeit die in der Suspension befindliche Flüssigkeit ohne weitere Hilfsmittel lediglich aufgrund der Schwerkraft durch das Material des Filtertuchsacks hindurch tritt, während die Kristalle aufgrund einer Porengröße des Filtertuchsacks im Inneren des Filtertuchsackes zurückgehalten werden.

Dieses Verfahren ist mit einer zuvor beschriebenen Vorrichtung durchführbar.

Das Verfahren zeichnet sich aus durch seine einfache und kostengünstige Durchführbarkeit. Zur Trennung von Flüssigkeit und Kristallen aus Suspensionen ist bei dem erfindungsgemäßen Verfahren im Gegensatz zu den aus dem Stand der Technik bekannten Verfahren ein weiterer Schritt, wie beispielsweise das Anlegen eines Druckes bzw. eines Unterdruckes oder das Rotieren einer Zentrifuge nicht erforderlich. Zur Durchführung des hier angegebenen Verfahrens ist ein technisch aufwendiger und damit kostenintensiver Aufbau nicht erforderlich. Zur eigentlichen Auftrennung der Suspension in die Bestandteile Kristalle und Flüssigkeit ist lediglich ein vertikal aufgehängter Filtertuchsack erforderlich, in den die Suspension eingefüllt werden kann, die eigentliche Trennung wird durch die Wirkung der Schwerkraft initiiert. Wenn in diesem Zusammenhang von lediglich aufgrund der Schwerkraft die Rede ist, so ist hierdurch eine ggf. auftretende zusätzliche Wirkung aufgrund von durch die Kleinporigkeit des Materials des Filtertuchsacks ausgelösten Kapillarkräften nicht ausgeschlossen.

Um den für die Durchführung des Verfahrens erforderlichen apparativen Aufbau weiterhin einfach zu halten, wird mit einer Weiterentwicklung des Verfahrens vorgeschlagen, daß die Suspension über eine ein Gefälle aufweisende Leitung lediglich unter Ausnutzung der Schwerkraft dem mindestens einen Filtertuchsack zugeführt wird.

Sowohl aus ökologischer als auch aus ökonomischer Sicht sinnvoll ist es, wenn die Filtertuchsäcke für das Verfahren mehrfach verwendet werden. Hierzu wird gemäß einer Weiterbildung des Verfahrens vorgeschlagen, daß der mindestens eine Filtertuchsack bei Erreichen eines maximal hohen Füllgrades mit abgetrennten Kristallen geleert und anschließend wieder verwendet wird. Um bei den mittels des Filtertuchsackes abgetrennten Kristallen die Restfeuchte so gering wie möglich zu halten, ist gemäß einer Weiterbildung der Erfindung vorgesehen, daß der mit Kristallen gefüllte mindestens eine Filtertuchsack vor dem Leeren ohne weitere Beschickung mit der Suspension über einen vorgebbaren Zeitraum zum Abtropfen frei hängen gelassen wird. Beträgt dieser Zeitraum, wie gemäß einer Weiterbildung des Verfahrens vorgesehen, etwa 24 Stunden, so kann eine Restfeuchte in den Kristallen von 10% und darunter erreicht werden.

Schließlich wird mit der Erfindung in einem weiteren Aspekt eine Kristallisationsanlage zur Regeneration von chemischen Lösungen, insbesondere aus Beizen, der über eine Zuleitung zu regenerierende Lösung zuführbar ist und in der durch Kühlung ein der Lösung zu entziehender Bestandteil in Kristallform ausgefällt wird, angegeben, bei welchem die Krisallisationsanlage zum Trennen der ausgefällten Kristalle von der Lösung eine Vorrichtung wie oben beschrieben aufweist. Aufgrund der eingangs erwähnten Kostenvorteile der beschriebenen Vorrichtung, die sich insbesondere bei Vorrichtungen mit kleinem und mittlerem Durchsatz ergeben, kann eine erfindungsgemäß aufgebaute Kristallisationsanlage gegenüber herkömmlichen Regenerationsanlagen, die zur Trennung von Kristallsuspensionen in ihre Bestandteile Kristalle bzw. Flüssigkeit aufwendige Apparaturen, wie beispielsweise Zentrifugen oder Filterpressen verwenden, wesentlich kostengünstiger hergestellt und angeboten werden. Dies wirkt sich insbesondere bei kleineren bzw. mittelgroß dimensionierten Regenerationsanlagen aus, welche naturgemäß Trennvorrichtungen erfordern, die nur einen kleineren bzw. mittleren Durchsatz haben.

Weitere Vorteile und Merkmale der Erfindung ergeben sich aus dem nachfolgend anhand der beigefügten Figuren geschilderten Ausführungsbeispiel. In den Figuren zeigen:
- Figur 1: schematisch den Aufbau einer Regenerationsanlage zur Regeneration einer chemischen Lösung, in die eine Vorrichtung gemäß der Erfindung integriert ist,
- Figur 2: eine teilweise geschnittene, schematische Ansicht des Aufbaus einer erfindungsgemäßen Vorrichtung, wie sie in einer Regenerationsanlage gemäß dem Schema aus Figur 1 integriert ist, und
- Figur 3: in einer anderen Ansicht schematisch die in eine Regenerationsanlage nach dem Schema aus Figur 1 integrierte Vorrichtung zum Trennen in einer Suspension befindlichen Kristallen von der Flüssigkeit.

Die Figuren sind schematische Darstellungen und nicht notwendigerweise maßstabsgerecht. In den Figuren sind gleiche Teile mit gleichen Bezugszeichen versehen.

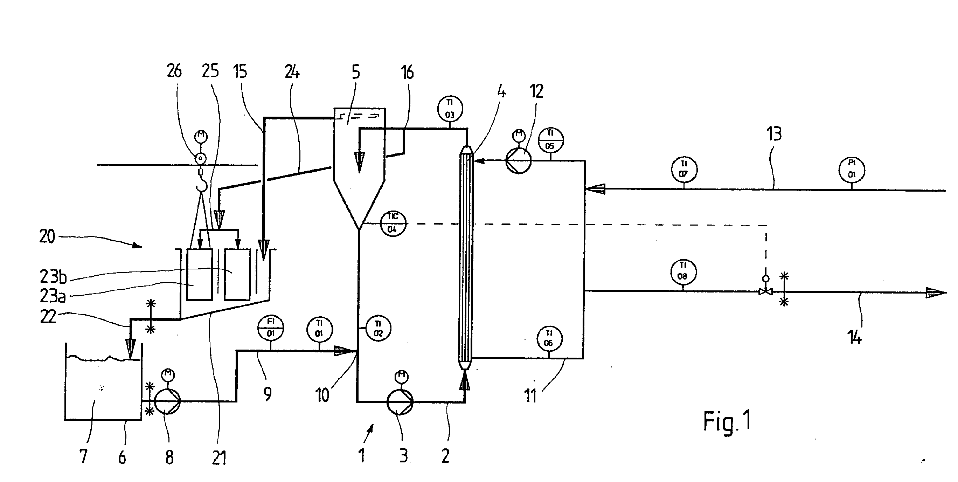

In Figur 1 ist mit dem Bezugszeichen 1 eine Regenerationsanlage zur Regeneration von chemischen Lösungen bezeichnet. Im vorliegenden Ausführungsbeispiel wird die Kristallisationsanlage zur Regeneration einer Beizensäure verwendet, wie sie beispielsweise zum Beizen von metallischen Werkstücken im Verlaufe einer Galvanisierungsbehandlung oder Ähnlichem Verwendung findet. Herzstück der eigentlichen Regenerationsanlage ist eine Zirkulationsleitung 2, in welcher eine Umwälzpumpe 3 angeordnet ist. Ein Teilstück der Zirkulationsleitung 2 führt durch einen Wärmetauscher 4. In Strömungsrichtung dem Wärmetauscher 4 nachgeschaltet ist ein Klärer 5, der wiederum in die Zirkulationsleitung 2 mündet.

In einem Badbehälter 6 befindet sich eine chemische Lösung 7, vorliegend eine Beizensäure. An den Badbehälter 6 angeschlossen ist eine Leitung 9, in welcher eine Pumpe 8 angeordnet ist. Die Leitung 9 mündet bei dem Anschluß 10 in die Zirkulationsleitung 2 der Regenerationsanlage 1.

An den Wärmetauscher 4 angeschlossen ist eine Kühlmittelleitung 11, in der eine Pumpe 12 integriert ist. In die Kühlmittelleitung 11 mündet eine Kühlmittelzuleitung 13. Desweiteren ist an die Kühlmittelleitung 11 eine Kühlmittelableitung 14 angeschlossen.

Im oberen Bereich des Klärers 5 zweigt eine Überlaufleitung 15 ab, die in ein zu der allgemein mit 20 bezeichneten Trennvorrichtung gehöriges Spritzschutzgehäuse 21 mündet. Das Spritzschutzgehäuse 21 weist ein Gefälle auf und eine Leitung 22 führt von dem tiefsten Punkt des Spritzschutzgehäuses 21 zurück in den Badbehälter 6. Als weitere Bestandteile der Trennvorrichtung 20 sind in dem Spritzschutzgehäuse 21 zwei Filtertuchsäcke 23a und 23b angeordnet, die vertikal aufgehängt sind. In das Innere der Filtertuchsäcke 23a, 23b münden jeweils Auslässe einer Verteilerleitung 25, welche mit einer Falleitung 24 verbunden ist. Die Falleitung 24 ist an dem Abzweig 16 mit der Zirkulationsleitung 2 der Regenerationsanlage 1 verbunden. Schließlich weist die Vorrichtung 20 einen Kran 26 zur Handhabung der Filtertuchsäcke 23a bzw. 23b auf.

Die Regenerationsanlage 1 und dabei insbesondere die Trennvorrichtung 20 arbeiten dabei wie folgt:

Aus dem Badbehälter 6 wird kontinuierlich ein vorgebbarer Volumenstrom der Lösung 7, in diesem Fall der Beizensäure, entnommen und mittels der Pumpe 8 über die Leitung 9 zum Anschluß 10 gefördert, wo er in die Zirkulationsleitung 2 eintritt.

Der im Ausführungsbeispiel gewählte Volumenstrom beträgt etwa 1 cbm pro Stunde. In der Zirkulationsleitung 2 wird mittels der Umwälzpumpe 3 ein Kristallbrei, also eine Suspension aus Kristallen und Beizflüssigkeit umgewälzt. Die Beize enthält im vorliegenden Ausführungsbeispiel Eisen sowie Schwefelsäure, wobei in der Zirkulationsleitung 2 eine Übersättigung an Eisensulfat vorliegt, so daß der Beizensäure Eisensulfat entzogen wird, das als Kristall ausfällt. Entscheidend für das Kristallwachstum ist hierbei die Konzentration der Kristalle in der in der Zirkulationsleitung 2 umgewälzten Kristallsuspension, da die Übersättigungsabbaurate eine Funktion der Kristalloberfläche ist. Da aufgrund des Zulaufs der auf einer vergleichsweise hohen Temperatur gehaltenen chemischen Lösung 7 in Form der Beizensäure eine geringfügige Temperaturerhöhung der in der Zirkulationsleitung 2 umlaufenden Suspension erfolgt, wird diese mit Hilfe des Wärmetauschers 4 abgeführt, die in der Zirkulationsleitung 2 umlaufende Suspension wird auf einer konstanten niedrigen Temperatur gehalten. Nach Verlassen des Wärmetauschers 4 gelangt die Suspension in den Klärer 5, in welchem die Kristalle, welche eine höhere Dichte als die chemische Lösung 7 aufweisen, zu Boden sinken. Somit sammelt sich im oberen Bereich des Klärers 5 eine klare und im wesentlichen kristallfreie Lösung an, die als regenerierte Lösung über die Überlaufleitung 15 in das Spritzschutzgehäuse 21 und von dort aus über die Leitung 22 in den Badbehälter 6 zurück geführt wird. Diese Rückführung erfolgt ohne Einsatz von Pumpen, lediglich aufgrund der Ausnutzung der Schwerkraft in mit Gefälle ausgebildeten Leitungen.

An dem Abzweig 16 wird aus der Zirkulationsleitung 2 stets ein Anteil der Suspension entnommen und über die Falleitung 24, welche bereits Bestandteil der Trennvorrichtung 20 ist, dem Herzstück der Trennvorrichtung, nämlich den Filtertuchsäcken 23a bzw. 23b zugeführt. Tatsächlich wird nur jeweils einer der Filtertuchsäcke 23a oder 23b mit der Suspension beschickt. Eine Auswahl des zu beschickenden Filtertuchsacks 23a oder 23b erfolgt durch entsprechende Ventile (nicht eingezeichnet) in der Verteilerleitung 25. Die Filtertuchsäcke 23a und 23b sind im gezeigten Ausführungsbeispiel Filtertuchsäcke von einem Fassungsvermögen von 1 cbm und bestehen aus einem Polypropylengewebe, welches gegenüber den im Verfahren befindlichen Chemikalien inert ist. Die wirksame Porenweite des Materials der Filtertuchsäcke liegt bei etwa 200 µm. Die Suspension gelangt über die Falleitung 24 lediglich angetrieben durch die auf sie wirkende Schwerkraft in einen der beiden Filtertuchsäcke 23a bzw. 23b, wobei der flüssige Anteil der Suspension, in diesem Fall die chemische Lösung 7 in Form der Beizensäure, das Material des jeweils aktiven Filtertuchsacks 23a bzw. 23b passieren kann. Angetrieben wird die Flüssigkeit hierbei lediglich durch die auf sie wirkende Schwerkraft sowie ggf. durch Kapillareffekte des Materials der Filtertuchsäcke. Um ein Einfallen der Filtertuchsäcke zu verhindern, sind diese im oberen Bereich mit einem den Filtertuchsack entlang seines Umfanges abstützenden Versteifungsring versehen. Die Beschickung der Filtertuchsäcke entspricht im Ausführungsbeispiel etwa 50 kg Kristalle pro Stunde. Denkbar ist die Realisierung aber auch für Anlagen mit einer Beschickung von bis zu 250 kg Kristalle pro Stunde.

Die durch die Filtertuchsäcke 23a bzw. 23b hindurch tretende Flüssigkeit in Form der chemischen Lösung 7 bzw. der Beizensäure gelangt in das Spritzschutzgehäuse 21 und wird über die Leitung 22 in den Badbehälter 6 zurück geführt.

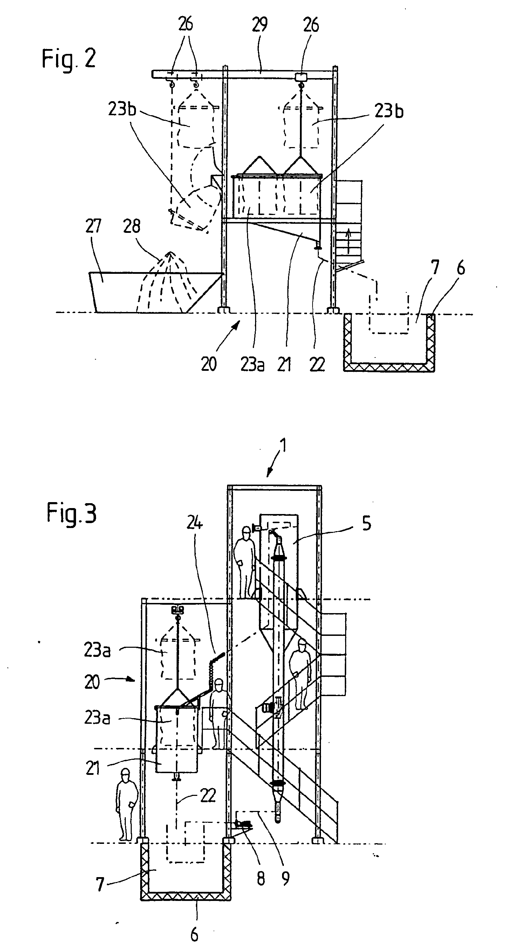

Ist der gerade mit der Suspension beschickte Filtertuchsack 23a bzw. 23b mit Kristallen gefüllt, das heißt ist sein Fassungsvermögen erschöpft, so wird über die Ventilschaltung in der Verteilerleitung 25 der jeweils andere Filtertuchsack 23b bzw. 23a mit der Suspension beschickt. Der nun angefüllte Filtertuchsack wird über einen Zeitraum von etwa 24 Stunden hängen gelassen, damit er weiter abtropfen kann, bevor er mittels des Krans 26 aus dem Spritzschutzgehäuse 21 gehoben und in einen dafür vorgesehenen Behälter (siehe Figur 2) entleert wird. Durch das Abtropfen über einen Zeitraum von ca. 24 Stunden kann eine Restfeuchte der in dem Filtertuchsack aufgefangenen Kristalle von 10% und weniger erreicht werden. Der geleerte Filtertuchsack 23a bzw. 23b wird mit Hilfe des Kranes 26 in das Spritzschutzgehäuse 21 zurück eingesetzt und kann nun bei Erreichen des Fassungsvermögens des derzeit mit Suspension beschickten Filtertuchsackes wieder zur Beschickung mit der Suspension angewählt werden. Analog wird der dann gefüllte Filtertuchsack zunächst über ca. 24 Stunden abtropfen gelassen, bevor er geleert und wieder zurück verbracht wird.

In Figur 2 ist ebenfalls schematisch jedoch vom Aufbau her etwas deutlicher der Aufbau der in der Regenerationsanlage 1 integrierten Trennvorrichtung 20 dargestellt. Neben den bereits im Zusammenhang mit Figur 1 beschriebenen und diskutierten Merkmalen ist hier eine Schiene 29 zu erkennen, entlang der Kran 26 mit daran angehängtem Filtertuchsack 23b (in der Figur in mehreren Stellungen dargestellt) verfahren kann. Am Ende der Schiene 29 ist unterhalb derselben ein Container 27 aufgestellt, in dem durch Abkippen des Filtertuchsacks 23b die in dem Filtertuchsack 23b aufgefangenen Kristalle 28 ausgeleert werden.

Figur 3 dient noch einmal der Veranschaulichung der Regenerationsanlage 1 mit darin integrierter Trennvorrichtung 20.

Das gezeigte Ausführungsbeispiel dient lediglich der Erläuterung und soll nicht als beschränkend verstanden werden. So ist insbesondere der Einsatz der erfindungsgemäßen Trennvorrichtung nicht auf den Einsatz in einer Regenerationsanlage der gezeigten Art beschränkt, erfindungsgemäße Trennvorrichtungen können beispielsweise in allen Kristallisationsanlagen mit kleiner Kristallproduktion eingesetzt werden.

### Bezugszeichenliste:

- 1: Regenerationsanlage
- 2: Zirkulationsleitung
- 3: Umwälzpumpe
- 4: Wärmetauscher
- 5: Klärer
- 6: Badbehälter
- 7: Lösung
- 8: Pumpe
- 9: Leitung
- 10: Anschluß
- 11: Kühlmittelleitung
- 12: Pumpe
- 13: Kühlmittelzuleitung
- 14: Kühlmittelableitung
- 15: Überlaufleitung
- 16: Abzweig
- 20: Trennvorrichtung
- 21: Spritzschutzgehäuse
- 22: Leitung
- 23a/23b: Filtertuchsack
- 24: Falleitung
- 25: Verteilerleitung
- 26: Kran
- 27: Container
- 28: Kristalle
- 29: Schiene

## Patentansprüche

1. Vorrichtung zum Trennen von mit einer Flüssigkeit in einer Suspension befindlichen Kristallen von der Flüssigkeit,
**gekennzeichnet durch**
mindestens einen mit der Suspension befüllbaren, Filtertuchsack (23a, 23b), dessen Filterporen so bemessen sind, daß die abzutrennenden Kristalle zurückgehalten werden, die Flüssigkeit die Filterporen jedoch passieren kann, und **durch** den die Flüssigkeit ohne weitere Hilfsmittel, angetrieben lediglich **durch** die auf sie wirkende Schwerkraft hindurchtritt.

2. Vorrichtung nach Anspruch 1, **dadurch gekennzeichnet, daß** der mindestens eine Filtertuchsack (23a, 23b) in der Vorrichtung vertikal aufgehängt ist.

3. Vorrichtung nach einem der Ansprüche 1 oder 2, **gekennzeichnet durch** eine mit einem Gefälle versehene, in das Innere des mindestens einen Filtertuchsackes (23a, 23b) mündende Zuführleitung (24), **durch** welche die Suspension aufgrund der Schwerkraft in den mindestens einen Filtertuchsack (23a, 23b) gelangt.

4. Vorrichtung nach einem der voranstehenden Ansprüche, **dadurch gekennzeichnet, daß** der mindestens eine Filtertuchsack (23a, 23b) aus einem für die beteiligten Kristalle und Flüssigkeit chemisch inerten Material gefertigt ist.

5. Vorrichtung nach einem der voranstehenden Ansprüche, **dadurch gekennzeichnet, daß** der mindestens eine Filtertuchsack (23a, 23b) aus einem Kunststoffgewebe aufgebaut ist.

6. Vorrichtung nach Anspruch 5, **dadurch gekennzeichnet, daß** der mindestens eine Filtertuchsack (23a, 23b) aus einem Polypropylengewebe aufgebaut ist.

7. Vorrichtung nach einem der voranstehenden Ansprüche, **dadurch gekennzeichnet, daß** der mindestens eine Filtertuchsack (23a, 23b) einen wirksame Porenweite von 100 bis 300 µm, vorzugsweise von 150 bis 250 µm aufweist.

8. Vorrichtung nach einem der voranstehenden Ansprüche, **dadurch gekennzeichnet, daß** vertikal unterhalb des mindestens einen Filtertuchsackes (23a, 23b) ein Auffangbehälter (6) für die durch den Filtertuchsack (23a, 23b) hindurchtretende Flüssigkeit angeordnet ist.

9. Vorrichtung nach einem der voranstehenden Ansprüche, **dadurch gekennzeichnet, daß** der mindestens eine Filtertuchsack (23a, 23b) von einem als Spritzschutz dienenden, in einem unteren Bereich offenen Gehäuse (21) umgeben ist.

10. Vorrichtung nach einem der voranstehenden Ansprüche, **dadurch gekennzeichnet, daß** sie mindestens zwei Filtertuchsäcke (23a, 23b) aufweist, von denen jeweils einer als aktiver Filtertuchsack (23a, 23b) mit der Suspension befüllbar ist und der andere sich als passiver Filtertuchsack (23a, 23b) so lange in einer Wartestellung befindet, bis der erste Filtertuchsack (23a, 23b) zu Zwecken der Leerung in einen passiven Zustand geschaltet wird und der zweite Filtertuchsack (23a, 23b) dann als aktiver Filtertuchsack (23a, 23b) mit der Suspension befüllbar ist.

11. Vorrichtung nach einem der voranstehenden Ansprüche, **gekennzeichnet durch** einen Behälter (27) zum Aufnehmen der in dem mindestens einen Filtertuchsack (23a, 23b) angesammelten Kristalle.

12. Vorrichtung nach einem der voranstehenden Ansprüche, **gekennzeichnet durch** ein Handhabungsmittel (26), bspw. einen Kran, zum Handhaben des mindestens einen Filtertuchsackes (23a, 23b).

13. Verfahren zum Abtrennen von Kristallen aus einer Suspension,
**dadurch gekennzeichnet,**
**daß** die Suspension in das Innere mindestens eines Filtertuchsackes eingefüllt wird, wobei zur Trennung von Kristallen und Flüssigkeit die in der Suspension befindliche Flüssigkeit ohne weitere Hilfsmittel lediglich aufgrund der Schwerkraft durch das Material des Filtertuchsackes hindurchtritt, während die Kristalle aufgrund einer Porengröße des Filtertuchsackes im Inneren des Filtertuchsackes zurückgehalten werden.

14. Verfahren nach Anspruch 13, **dadurch gekennzeichnet, daß** die Suspension über eine, ein Gefälle aufweisende, Leitung lediglich unter Ausnutzung der Schwerkraft dem mindestens einen Filtertuchsack zugeführt wird.

15. Verfahren nach einem der Ansprüche 13 oder 14, **dadurch gekennzeichnet, daß** der mindestens eine Filtertuchsack bei Erreichen eines maximal hohen Füllgrades mit abgetrennten Kristallen geleert und anschließend wiederverwendet wird.

16. Verfahren nach einem Anspruch 15, **dadurch gekennzeichnet, daß** der jeweils mit Kristallen gefüllte Filtertuchsack vor dem Leeren ohne weitere Beschickung mit der Suspension über einen vorgebbaren Zeitraum zum Abtropfen frei hängen gelassen wird.

17. Verfahren nach Anspruch 16, **dadurch gekennzeichnet, daß** der mit Kristallen gefüllte Filtertuchsack vor dem Leeren über einen Zeitraum von etwa 24 Stunden zum Abtropfen hängen gelassen wird.

18. Kristallisationsanlage zur Regeneration von chemischen Lösungen, insbesondere aus Beizen, der über eine Zuleitung (9) zu regenerierende Lösung (7) zuführbar ist und in der durch Kühlung ein der Lösung (7) zu entziehender Bestandteil in Kristallform ausgefällt wird,
**dadurch gekennzeichnet,**
**daß** die Regenerationsanlage (1) zum Trennen der ausgefällten Kristalle von der Lösung (7) eine Vorrichtung nach einem der Ansprüche 1 bis 12 aufweist.
